# EUROPEAN PATENT APPLICATION

(11) **EP 1 129 623 A1**
(43) Date of publication of application: **05.09.2001**
(21) Application number: 99954005.7
(22) Date of filing: 12.11.1999
(51) Int. Cl.: A23F 5/04

(54) **NEW PRODUCT BASED ON PACKAGED COFFEE FOR INFUSION, PROCESS FOR ITS PREPARATION AND APPLICATIONS**

(30) Priority: 13.11.1998 ES 9802386
(71) Applicant: Compania Internacional de Cafes, S.A. Cofesa, 04120 La Canada (ES)
(72) Inventor: DIAZ MARTINEZ, José, Luis, E-04120 La Canada (ES)
(74) Representative: Ungria Lopez, Javier
(86) International application number: ES9900364
(87) International publication number: WO0028832

(57) **Abstract**

Said product is a one hundred per cent natural coffee of the Coffea Arábica variety, roasted, ground and packaged in individual paper bags for instant brewing.

The process comprises the packaging of the previously roasted and ground coffee in a paper bag suitable for brewing and the subsequent introduction of said bag in another aluminum bag in which an inert gas is injected and which is sealed hermetically.

This coffee product is used for the production of brews which are to be beverages with stimulating effects on the body.

## Description

### TECHNICAL FIELD OF THE INVENTION

The present invention fits in the technical field of coffee prepared for brewing.

More specifically, the present invention provides a new product consisting of coffee packaged in brewing bags, that provides a coffee brew of excellent characteristics.

### PRIOR ART OF THE INVENTION

Coffee is the seed of the coffee tree. Once harvested, it is subjected to pulp removal in order to separate the seeds from the pulp that surrounds them. Then they are left to ferment for twenty-four hours in barrels or tanks in order to clean the seeds of the gummy substances that cover them and finally they are subjected to peeling, after which they are suitable for storage. Good coffee is recognized by its hardness, sonority and smoothness.

The bean used to prepare the beverage also named coffee, tends to be previously roasted and ground. The most common roasts are natural and torrefied, to which a bit of sugar is added, whereby a darker bean with a somewhat stronger and more bitter taste is obtained.

The beverage is obtained by making an aqueous extraction, at the boiling temperature of water, of the roasted and ground coffee bean. Therefore, the decoction method as well as the brewing method may be used. Although, in general, coffee is not usually boiled in water, but rather the boiling water passes through the coffee and the liquid free of dregs is collected.

The beverage thus obtained is highly valued in the Western world where it is widely consumed mainly due to its pleasant taste and stimulating properties.

The coffee beverage contains a large amount of natural chemical constituents with different actions on the body, actions which are more or less beneficial.

The following are among the most known constituents:
- Caffeine: it is chemically related to uric acid and contains a purinic core for which reason it is not advisable in the cases of gout and kidney stones. It has activity on the vasomotor nerves, but it does not act the same way on all arteries. While it constricts some arteries increasing arterial pressure it dilates coronary and cerebral arteries. It is a stimulant of the cerebral cortex and it is used as an antidote of hynotics, sedatives, alcohols, etc. It also has diuretic properties and it increases the strength of the heart. Its excess produces palpitations and insomnia.
- Caffeone: It is an empyreumatic essential oil with stimulating action on the cerebral system.
- Oleic acid and palmitic acid glycerides
- Terpenic alcohols among which diterpenic alcohol such as caffestol and kahweol, which have been recently related to hypercholesteremia and arteriosclerosis, are included.

There is an ample and varied industry regarding coffee due to the fact that many factors intervene in the obtainment of good coffee and consumers are more and more demanding. Hence, the crop of a good bean as well as the subsequent treatment of roasting and grinding thereof are essential. In order to obtain the beverage from a good ground coffee, the quality of the coffee is as important as the device used to obtain the brew and the filtering systems of the dregs, the water temperature, the contact time, etc. Therefore, only a perfect combination of all of these elements permits a beverage that combines all of the requirements necessary to provide a good taste along with some acceptable physiological properties for the body, to reach consumers.

Proof of the interest of the coffee industry is the large number of patents and utility models related therewith. There are patents related to roasting and grinding methods, patents regarding filtering devices and filtering materials for the dregs, patents regarding different systems of coffee makers and similar devices to prepare the beverage, patents regarding industrial coffee vending machines, patents regarding the packaging and storage so that the coffee does not loss its aroma or properties, etc.

Nonetheless, although the preparation of coffee in certain environments may even become a ritual, it is certain that the obtainment of a good coffee, involves an amount of time that consumers do not always have. Therefore, it would be of great industrial interest to be able to have individual coffee bags ready to instantly prepare a cup of coffee, just as it is usually done with herb teas (chamomile, tea, mint tea, anise-flavored tea, etc.)

For this purpose some inventions mainly centered on the bag or container used to contain the coffee have been registered, among which the following can be cited: U0107117, U0114311, U0215082, U0215083, U0234220, U0296178, U9103062, U9401585, U9500367, U9600293, P0492426, P0545188, P0550102, E86115564, E86116837, E93200371, E94115025, E90100265, E9011462, E91917661.

Besides, the following patents can be cited as registrations that are especially related to the object of the present invention:
- E86116837: This patent refers to a brewing bag for the production especially of coffee beverages, in doses equivalent to a cup, which by means of up and down movement of the bag produces a pumping that together with a pumping chamber achieves a current of two or more partial chambers.
- E91480045: This patent refers to a process and a device for making coffee directly in a cup from ground torrefied coffee in a brewing bag. It is a porous filter-bag device that contains a ground coffee mass prepared and adapted for extraction by hot water which circulates with force inside it thanks to successive outside pressures and slackenings that are applied on the coffee mass through its wrapping that acts as a filter for the contained ground coffee mass, that is entirely compressible reversibly, due to the addition of multiple particles that are also reversibly compressible. These particles are evenly distributed through the entire ground coffee mass, in such a way that the hot liquid, absorbed or that comes out through the pores, circulates with force through most of the ground coffee. The device is especially designed to rapidly obtain coffee and/or tea or herb tea.
- E93500122: This patent refers to a self-preserving coffee bag assembly that includes a bag for the coffee, made from a closed tubular filtering paper body that contains an amount of coffee according to a pre-defined ratio with the inside capacity of the bag, in such a way that it is only partly filled. The coffee that can be stored in one of the ends of the bag is formed in a ball around which the empty part of the bag folds. The folded bag is kept inside a sealed capsule in which it fits in a tight manner and this isolates the bag from the environment.

Nonetheless, despite the researching efforts shown in these patents and others, it is certain that no coffee packaged in bags, to be used to prepare an instant brew, that adequately satisfies consumers, has not yet been put on the market.

The applicant has spent many years of research on the study of all of the components that intervene in the obtainment of good coffee in order to duly harmonize them and achieve an individual coffee bag for an instant brew that has the organoleptic characteristics required by the most demanding consumer, at the same time that it has some improved physiological properties with respect to other coffee beverages obtained by other methods.

### DETAILED DESCRIPTION OF THE INVENTION

As described in the title, the present invention refers to a new coffee based product packaged for brewing, a process for the preparation thereof and uses thereof.

The present invention is the result of years of research by the applicant, during which multiple tests have been carried out testing different types of coffee, different degrees of roasting and grinding, different sizes and shapes of container bags, different materials for the same, different proportions of coffee, etc.

Hence, the new product of the invention is roasted and ground coffee packaged in individual bags for instant brewing thereof, that meets the following requirements:

### A. Nature of the paper

The paper used to manufacture the bags meets the requirements established by the European Food Regulations. It is comprised of 75-80% cellulose fibers whitened with peroxides and 20-25% polyethylene fibers whose purpose is to permit sealing.

The most characteristic specifications of said paper corresponds to its grammage of 21.5±1.1 g/m² and to its air permeability higher than 700 l/m².s as a measurement indicative of its porosity.

Furthermore, the paper has a tractive resistance and temperature resistance sufficient to resist its use in the form of brewing bags without breaking.

### B. Size and shape of the bag

The bag is rectangular with some dimensions of 7±0.5 cm on its longest side and 5±0.5 cm on its shortest side and it is rounded by an edge of paper on the outside until some dimensions of 8±0.5 cm and 6.5±0.5 cm, respectively, are achieved.

### C. Characteristics of the coffee

The coffee used in the invention is 100% ground natural coffee with an average particle size of 0.056±0.005 mm, of the "Cafefusion" brand of the applicant himself. As to its composition, it is the result of the mixture of Coffea Arábica variety coffees, imported from several Central American and South American countries, that is roasted in a home-made manner, between 200 and 220°C, the duration of the roasting being approximately between 18-22 minutes.

This coffee has a caffeine content of approximately 1.3±0.1%, enough to ensure its vitalizing, invigorating and energy-producing properties.

On the average an amount of 6.5±0.1 g of coffee is introduced in the bags.

### D. Preparation of the brew

Approximately 90-110 mL of water are heated to the boiling temperature and poured on a coffee bag previously placed in a cup or similar container. Then the bag is pressed with a spoon and stirred for 1-2 minutes, finally leaving it to stand for 2-3 minutes.

### E. Characteristics of the resulting brew

The analysis carried out on the brew obtained from the product of the present invention manifests that a beverage of excellent quality from the organoleptic point of view is obtained, maintaining the properties of genuine aroma and taste of recently roasted coffee made by the traditional method.

Nonetheless, a noteworthy characteristic is that the analysis have shown the practically total absence of diterpenic alcohols, basically caffestol and kahweol, which appear at the most in non-quantifiable trace amounts.

This aspect is of great interest from the point of view of the health of consumers, given that the consumption of large amounts of coffee has been related to the risk of suffering from cardiovascular diseases [(1) Dawer et al., 1974, N Engl J Med 1974; 291: 871-874; (2) Heyden et al., 1978, Arch Intern Med; 138: 1472-1475], possibly due to the variations that are produced in cholesterol in the blood [(3) Thelle et al., 1983, N Engl J Med; 308: 1454-1457] and more specifically to the increase of diterpenic alcohols, caffestol and kahweol, present in coffee [(4) van Rooij et al., 1995, Am J Clin Nutr; 61: 1277-1283; (5) Urgert et al., 1995, Am J Clin Nutr; 61: 149-154; (6) Urgert et al., 1996, Brit Med J; 313: 1362-1366], in such a way that when the coffee brew contains higher concentrations of these alcohols, higher values of cholesterol in the blood of consumers are observed [(7) Ahola et al., 1991, J Intern Med; 230: 293-297; (8) van Dusseldorp, 1991, Arterioscler Thromb; 11: 586-593; (9) Fried et al., 1992, JAMA 267: 811-815; (10) Ratnayake et al., 1993, Food Chem Toxicol; 31: 263-269; (11) Urgert et al., 1995, J Agric Food Chem; 43: 2167-2172].

The relationship between high levels of total cholesterol and LDL-cholesterol in the blood and the development of arteriosclerosis is also known [(12) Denke, 1994, Med Clin North Am; 78:197-223].

Likewise, the consequences that the development of arteriosclerosis has, particularly in the appearance of angina pectoris, heart attack and cerebral thrombosis type cerebral vascular accident are also known. These are responsible as a whole of 50% of deaths in the Western world [(13) Gordon et al., 1971, JAMA, 215: 1617-1625].

Finally, the relationship between high levels of cholesterol in the blood and the appearance of unstable atheroma plaques that could cause episodes of sudden death has recently been discovered [(14) Burke et al., 1997, N Engl J Med; 336: 1276-1282].

The present invention provides a new product that eliminates the most harmful aspects of traditionally prepared coffee, at the same time that it maintains the characteristics of taste, aroma and stimulating properties required by the most demanding consumers. And above all this is the result of a perfect combination of elements regarding the nature of coffee, the degree of roasting and grinding, the type of paper, permeability and grammage thereof and the way the brew is prepared.

### F. Preservation and presentation

In order to adequately protect the properties and aroma of the coffee, the bags containing the roasted and ground coffee are introduced in another aluminum bag and inert gas is injected when the bag is closed by heat sealing.

The bags thus prepared are packaged in containers containing the suitable number of bags, normally ten, and the containers are stored until they are marketed.

### EMBODIMENTS OF THE INVENTION

The present invention is additionally illustrated by means of the following Example that should not be considered as restrictive of its scope.

### EXAMPLE

1 kg of "Cafefusión" brand coffee roasted at 210°C for 20 minutes was ground. Then it was ground to a particle size of 0.056 mm.

Portions of 6.5 g of this coffee were taken and introduced in rectangular HUDSE 21 S (manufactured by Papeteries de Cascadec) paper bags, with some inside dimensions of 7 x 5 cm and outside dimensions of 8 x 6.5 cm.

Part of the bags thus prepared were packaged in other individual aluminum bags injecting inert gas before the heat sealing thereof.

The rest of the bags were used to conduct the analysis of the brew obtained in the following manner:

A coffee bag was introduced in a cup, on which 100 mL of boiling water were poured, the bag was pressed with a spoon and moved for 1-2 minutes, after which it was left to stand for 2-3 minutes.

A comparative analysis was made regarding the concentrations of diterpenic alcohols existing in the brew thus obtained and in a cup of coffee obtained by the traditional method, namely, by using an electric coffee pot in which water is heated electrically in a tank and the water is made to pass through the coffee located in a paper filter.

The study was carried out using the same type of paper in both cases, the same amount of coffee and the same amount of water. The determination of the concentrations of caffestol and kahweol was carried out by using chromatographic techniques, using in a combined manner, according to the off-line type, high performance liquid chromatography (HPLC) and gas chromatography (GC), in such a way that from the coffee, prepared by the methods in question, a pre-separation by HPLC was made, the fraction corresponding to the studied compounds (caffestol and kahweol) was selected and collected and then analysis by GC was carried out. The analytical conditions that were used were the following:
- Pre-separation in HPLC:
   * Injector: Rheodyne valve
   * Injection volume: 20 *µ*L
   * Column: 50 x 4.6 mm i.d. Vydac 214 TPB
   * Temperature: 45°C
   * Detector: Ultraviolet (205 nm)
   * Eluent: methanol:water (55:45)
   * Flow: 2000 *µ*L/min
- GC Analysis:
   * Injector: Programmed temperature vaporizer (PTV)
   * Type of injection: cold, with flow division (ratio: 1:1)
   * Final temperature in the injector: 250°C
   * Injection volume: 30 *µ*L of the fraction previously separated in HPLC
   * Column: 25 m x 0.25 mm i.d. (melted silica)
   * Stationary phase: diphenylmethyl polysiloxane (5:95, v:v)
   * Thickness of the phase film: 0.25 *µ*m
   * Column temperature: programming of 130-230°C (10° C/min) and then up to 250°C (2°C/min)
   * Detector: Flame ionization detector (FID)
   * FID Temperature: 250°C

In all cases, the only step prior to analysis by HPLC and GC was the step of passing the sample through a filter of 0.22 *µ*m.

The obtained results are summarized in the following

**table:**

| | **Caffestol** | | **Kahweol** | |
|---|---|---|---|---|
| Means of preparation | M¹ | RSD² | M¹ | RSD² |
| Invention | t³ | - | t³ | - |
| Electric coffee pot | 139.0 | 2.5 | 100.0 | 13.2 |

| | | | | |
|---|---|---|---|---|
| ¹ Average value (in mg/L) obtained from three replicates | | | | |
| ² Relative standard deviations (%) obtained from the absolute areas measured in the chromatograms for the corresponding peaks (number of replications = 3) | | | | |
| ³ Trace amount (non-quantifiable) | | | | |

## Claims

1. Coffee based product comprising coffee packaged in an individual paper bag for brewing, **characterized in that** the paper of said bag is comprised of 75-80% cellulose fibers and 20-25% polyethylene fibers and has a grammage of 21.5±1.1 g/m² and an air permeability higher than 700 1/m².s, whereas the coffee is one hundred per cent natural and belongs to the Coffea Arábica variety, has been roasted at 200-220ºC for 18-22 minutes and has been ground up to a particle size of 0.056±0.005 mm.

2. Coffee based product according to claim 1, **characterized in that** said bag is rectangular, has some inside dimensions of 7±0.5 cm and 5±0.5 cm, respectively, and some outside dimensions of 8±0.5 cm and 6.5±0.5 cm, respectively.

3. Coffee based product according to claim 1, **characterized in that** the amount of coffee in said bag is 6.5±0.1 g.

4. Coffee based product according to any of the preceding claims, **characterized in that** when it is brewed in boiling water it gives rise to a brew that does not have appreciable amounts of diterpenic alcohols.

5. Coffee based product according to any of the preceding claims, **characterized in that** the paper bag with the coffee is housed in a hermetically sealed aluminum bag in which an inert gas has been injected.

6. Use of the coffee based product defined in any of the preceding claims, for the production of brews which are to be beverages with stimulating effects on the body.

7. Use according to claim 6, **characterized in that** said brews are substantially free from diterpenic alcohols.

8. Use according to claim 7, **characterized in that** said brews that are substantially free from diterpenic alcohols do thus not have hypercholesteremic and arteriosclerotic effects on the body.
